# EUROPEAN PATENT SPECIFICATION

(11) **EP 2 840 558 B1**
(45) Date of publication and mention of the grant of the patent: **17.10.2018**
(21) Application number: 14177568.4
(22) Date of filing: 18.07.2014
(51) Int. Cl.: G08B 13/196, H04N 7/18, H04N 5/77, G11B 27/031, G11B 20/10, H04N 5/91

(54) **Electronic device communicating with external cameras**
Elektronische Vorrichtung zum Kommunizieren mit externen Kameras
Dispositif électronique pour communiquer avec des caméras externes

(30) Priority: 09.08.2013 KR 20130094653
(43) Date of publication of application: 25.02.2015
(73) Proprietor: LG Electronics Inc., Seoul 07336 (KR)
(72) Inventor: Bang, Hyungjin, 137-893 Seoul (KR); Cho, Taehoon, 137-893 Seoul (KR)
(74) Representative: Ter Meer Steinmeister & Partner

(56) References cited:
- GB-A- 2 389 978
- GB-A- 2 451 291
- US-A1- 2006 146 140
- US-A1- 2007 019 077
- Anonymous: "Show All Images In One Index Image", , 29 July 2010 (2010-07-29), XP055197435, Retrieved from the Internet: URL:http://www.addictivetips.com/windows-t ips/cas-create-a-collage-of-images/ [retrieved on 2015-06-22]

## Description

### CROSS-REFERENCE TO RELATED APPLICATIONS

This application claims the benefit of earlier filing date and right of priority to Korean Patent Application No. 10-2013-0094653, filed on Aug 9, 2013.

### TECHNICAL FIELD

The present invention relates to an electronic device and a terminal communicating with an electronic device, and more particularly, to an electronic device capable of obtaining and storing an image captured using a camera of an external device when a specific event occurs, and a terminal communicating with an electronic device.

### DISCUSSION OF THE RELATED ART

As functions of terminals such as personal computers, laptop computers, cellular phones diversify, the terminals become multimedia players having multiple functions for capturing pictures or moving images, playing music, moving image files and games and receiving broadcasting programs. [0004] Terminals can be categorized as mobile terminals and stationary terminals. The mobile terminals can be further comprised of handheld terminals and vehicle mount terminals according to whether users can personally carry the terminals. Conventional terminals including mobile terminals provide an increasing number of complex and various functions.

To support and enhance the increasing number of functions in a terminal, improving a structural part and/or a software part of the terminal would be desirable.

US 2006/146140 A1 discloses a camera system and associated method including a digital camera that captures an image and creates a digital signal representative thereof and a wireless control apparatus. The digital camera wirelessly transmits the data signal to the wireless control apparatus. The wireless control apparatus includes a display device, such as an LCD, for displaying a displayed image based on the digital signal. The wireless control apparatus also includes an input apparatus used to cause the wireless control apparatus to generate one or more control signals which are wirelessly transmitted to the digital camera for execution thereby.

GB 2 451 291 A discloses a portable closed circuit television apparatus comprising one or more video cameras arranged to generate video data which is conveyed to a general control unit, a communication unit arranged to wireless transmit the video data to a remote counter part device, and one or more movement detectors for detecting movement and sending a detecting signal to the central control unit via a detector control unit in response to detected movement. The apparatus is arranged to selectively transmit video data to the counter part device in response to the detection signal.

GB 2 389 978 A discloses a security monitoring apparatus comprising: a remotely locatable device comprising a camera, sensing means and transmitting means, the remotely locatable device being operable on the detection by an invent by the sensing means, to transmit digital image data captured by the camera, and a server connected to a digital communication network and in communication with receiving means, the receiving means being operable to receive digital image data transmitted by the remotely locatably device, and the server being configured to transmit the digital image data to a monitoring work station in communication with the network.

The document "Show all images in one index image", July 29, 2010, retrievable from the internet under http://www.addictivetips.com/windows-tips/cas-create-a-collage-of-images/ refers to a software for arranging and combining a plurality of images of specific subjects.

### SUMMARY

An aspect of the present disclosure provides an electronic device capable of obtaining and storing an image captured using a camera of an external device when a specific event occurs, and a terminal communicating with an electronic device

The invention is set out by the subject matter of the appended claims.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.
FIG. 1 is a block diagram of an electronic device according to an embodiment of the present invention.
FIG. 2 is a view illustrating the electronic device of FIG. 1.
FIG. 3 is a flow chart illustrating an operation of the electronic device of FIG. 1.
FIG. 4 is a view illustrating the relations between the electronic device of FIG. 1 and external devices.
FIGS. 5 and 6 are views illustrating operations between the electronic device of FIG. 1 and external devices.
FIG. 7 is a flow chart illustrating an operation of a terminal according to an embodiment of the present invention.
FIGS. 8 through 10 are views illustrating a process of controlling an electronic device using a terminal of FIG. 7.
FIG. 11 is a view illustrating an example of a specific event.
FIGS. 12 through 15 are views illustrating an operation of a camera of an external device according to a specific event.
FIGS. 16 through 18 are views illustrating operations of a terminal connected through tagging.
FIGS. 19 through 21 are views illustrating operations regarding a particular person.
FIG. 22 is a view illustrating controlling of an external device according to occurrence of an event.
FIGS. 23 through 26 are views illustrating processing of captured images.
FIG. 27 is a view illustrating a point in time at which data is transmitted from an electronic device to a terminal.
FIGS. 28 and 29 are views illustrating a method for displaying images stored in an electronic device.
FIGS. 30 through 33 are views illustrating a method for displaying received images.

### DETAILED DESCRIPTION

The present invention will now be described more fully with reference to the accompanying drawings, in which exemplary embodiments of the invention are shown. The invention may, however, be embodied in many different forms and should not be construed as being limited to the embodiments set forth herein; rather, there embodiments are provided so that this disclosure will be thorough and complete, and will fully convey the concept of the invention to those skilled in the art.

Hereinafter, a mobile terminal relating to the present invention will be described below in more detail with reference to the accompanying drawings. In the following description, suffixes "module" and "unit" are given to components of the mobile terminal in consideration of only facilitation of description and do not have meanings or functions discriminated from each other.

The mobile terminal described in the specification can include a cellular phone, a smart phone, a laptop computer, a digital broadcasting terminal, personal digital assistants (PDA), a portable multimedia player (PMP), a navigation system and so on.

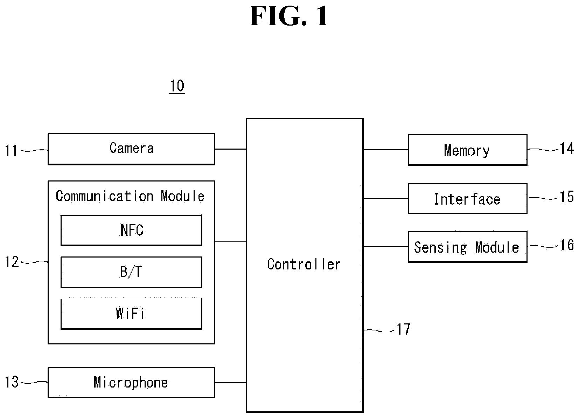

FIG. 1 is a block diagram of an electronic device according to an embodiment of the present invention.

As illustrated in FIG. 1, an electronic device 10 according to an embodiment of the present invention may include a camera 11, a communication module12, a microphone 13, a memory 14, an interface 15, a sensing module 16, and a controller 17.

The camera 11 may be a device installed in the electronic device 10 to capture an image. One or more cameras 11 may be provided in the electronic device 10. At least one of the cameras 11 may be a 3D camera that may be able to capture a stereoscopic image. The camera 11 may face in a forward direction of the electronic device 10. The camera 11 may rotate at a predetermined angle according to a control signal from the controller 17. The camera 11 may selectively capture an image according to a control signal from the controller 17. The camera 11 may process an image frame such as a still image, video, or the like, obtained by an image sensor in an image call mode or an image capture mode. An image frame processed by the camera 11 may be stored I n the memory 14 or may be transmitted outwardly through the communication module 12.

The communication module 12 may be a device allowing the electronic device 10 to exchange data with a different device such as an external device. The communication module 12 may include one or more communication units allowing for wired and/or wireless communication. For example, the communication module 12 may include a near field communication (NFC) unit, a Bluetooth (B/T) unit, a Wi-Fi unit, or the like. In the communication module 12, the one or more communication units may be selectively operated according to a control signal from the controller 17.

The microphone 13 may be a device that senses a sound generated around the electronic device 10. A sound obtained by the microphone 122 may undergo various noise canceling algorithms canceling noise included therein and subsequently be stored in the memory 14.

The memory 14 may include at least one type of storage mediums including a flash memory, a hard disk, a multimedia card micro type, a card-type memory (e.g., SD or DX memory, etc), a random access memory (RAM), a static random access memory (SRAM), a read-only memory (ROM), an electrically erasable programmable read-only memory (EEPROM), a programmable read-only memory (PROM), a magnetic memory, a magnetic disk, an optical disk, and the like. The mobile terminal 100 may also be operated in relation to a network storage device that performs the storage function of the memory 170 over a network, such as the Internet.

The interface 15 serves as an interface for an external device to be connected with the electronic device 10. For example, the interface 15 may receive data transmitted from an external device, receive power and transfer the power to elements and components within the electronic device 10, or transmit internal data of the electronic device 10 to such an external device. The interface 15 may include wired or wireless headset ports, external power supply ports, wired or wireless data ports, memory card ports, ports for connecting a device having an identification module, audio input/output (I/O) ports, video I/O ports, earphone ports, or the like.

The sensing module 16 may be a device that may sense an external environment of the electronic device 10. For example, the sensing module 16 may include a touch sensor or a proximity sensor.

The touch sensor may be configured to convert a change in pressure applied to a specific part of the electronic device 10 or a change in capacitance occurring at a specific part of the electronic device 10 into electric input signals. The touch sensor may also be configured to sense not only a touched position and a touched area but also touch pressure.

When a touch input is sensed by the touch sensor, a corresponding signal may be transmitted to a touch controller. The touch controller may process the received signal and subsequently transmit corresponding data to the controller 17. Accordingly, the controller 17 may sense which region of the electronic device 10 has been touched.

The proximity sensor may sense the presence or absence of an object approaching the electronic device 10. The proximity sensor may be a transmissive type photoelectric sensor, a direct reflective type photoelectric sensor, a mirror reflective type photoelectric sensor, a highfrequency oscillation proximity sensor, a capacitance type proximity sensor, a magnetic type proximity sensor, an infrared ray proximity sensor, or the like.

The controller 17 may generate a control command to control the electronic device 10 and an external device. For example, the controller 17 may generate a control signal according to an input from a user or a determination of the controller 17 itself.

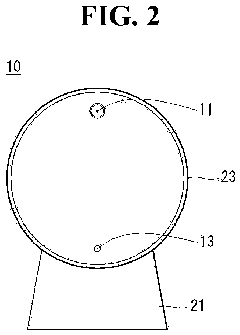

FIG. 2 is a view illustrating the electronic device of FIG. 1.

As illustrated in FIG. 2, the electronic device 10 according to an embodiment of the present invention may include a support unit 21 and a body unit 23.

The support unit 21 may support the electronic device 10 such that the electronic device 10 is installed at an intended position. The electronic device 10 may be mounted on a table, or the like, or attached to a wall surface or a ceiling surface. Thus, the support unit 21 may include a fixing unit that may be stably attached to a table, a wall surface, or a ceiling surface.

The body unit 23 may include the camera 11, the microphone 13, or the like. The camera 11, the microphone 13, or the like, may be positioned to face in a forward direction of the electronic device 10. When a specific event occurs, the controller 17 may6 operate the camera 11 to capture a person, or the like, in a front side thereof.

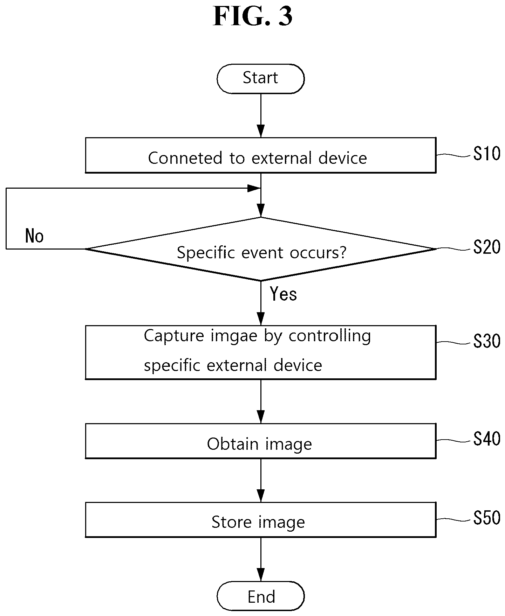

FIG. 3 is a flow chart illustrating an operation of the electronic device 10 of FIG. 1.

As illustrated in FIG. 3, the controller 17 of the electronic device 10 according to an embodiment of the present invention may connect the electronic device 10 to an external device in step S10.

The electronic device 10 and the external device may be connected in various manners. For example, the electronic device 10 and the external device may be connected through an NFC tagging operation, Bluetooth, or Wi-Fi.

The electronic device 10 and the external device may be connected after the external device is authenticated. For example, authentication of the external device may start when the external device is tagged to the electronic device 10 or when the external device enters a predetermine area from the electronic device 10.

Connection between the electronic device 10 and the external device may vary depending on an operation mode of the electronic device 10. For example, when the electronic device 10 is in a particular mode such as a party shot mode, the electronic device 10 may perform an array of operations such as attempting connection to the external device, and when the electronic device 10 is in a normal mode, the electronic device 10 may not perform an array of operations such as connection.

When the electronic device 10 and the external device are connected, the electronic device 10 and the external device may exchange data with each other. Here, data may be a basic signal allowing for maintaining communication between the electronic device 10 and the external device, a control signal of the electronic device 10 for controlling the external device, image data captured by the external device and sent to the electronic device 10, or the like.

Whether a specific event occurs may be determined in step S20.

A specific event may be a trigger for the controller 17 of the electronic device 10 to generate a particular control signal. In other words, a specific event may be an event enabling the electronic device 10 on standby to perform a particular operation.

A specific event may include a sound, an image including at least one of a particular object, a change in an image, a change in brightness, and a change in a position, and a change in positions of the electronic device 10 and an external object. Whether a specific event occurs may be sensed by at least one of the microphone 13, the camera 11, and the sensing module 16.

When a specific event is a sound, a rapid change in a sound obtained through the microphone 13 may be a specific event. For example, a specific event may be an event in which a sound is rapidly increased or decreased such as when singing for Happy birthday is sensed, when saying a particular word such as "Cheese!" for taking a photograph is sensed, when "Bottoms up!" is sensed, when an exclamation is sensed while attending a sporting event, when a sound of firecrackers is sensed, when a sound of hand clapping is sensed, and the like.

When a specific event is a particular object, an image captured through the camera 11 and/or the sensing module 16 may include the particular object. For example, a captured image may include a cake, candlelight, a cap for a party, or the like.

When a specific event is a change in an image, the event may include a movement of an object included in an image captured through the camera 11, brightness of an image, or the like. For example, the event may include cases in which a particular person in a captured image dances, a plurality of people make the same motion, brightness of an image is rapidly changed, a camera flash operates, a particular object enters a predetermined photo zone, or the like.

A specific event may be set by the user or may be added and/or deleted as needed.

When a specific event occurs, a particular external device may be controlled to capture an image in step S30.

The controller 17 of the electronic device 10 may control an external device to capture an image in response to a pre-set specific event. As described hereinafter, an external device connected to the electronic device 10 may include a device equipped with a camera. For example, the camera-equipped device may include a CCTV, a camera-equipped TVT, a camera-equipped mobile terminal, a camcorder, and the like.

When a specific event occurs, the electronic device 10 may transmit a control signal for operating a camera to the external device already connected thereto. Upon receiving the control signal, the external device may perform an array of corresponding operations to capture an image corresponding to an angle of view of the camera of the corresponding external device.

A captured image may be obtained in step S40 and stored in step S50.

The captured image may be obtained through the communication module 12. For example, when the external device is tagged to the electronic device 10, the captured image may be obtained through NFC, when the external device is connected to the electronic device 10 through Bluetooth, the captured image may be obtained through Bluetooth communication, and when the external device is connected to the electronic device 10, the captured image may be obtained through a wireless Internet.

The obtained image may be stored in the memory 14 of the electronic device 10.

The controller may sequentially store obtained images as they are.

The controller 17 may perform editing on the obtained image. For example, in case of a plurality of images of the same person and/or event, the plurality of images may be merged or synthesized in the form of panorama. Also, in case of a plurality of images of the same person and/or event captured at every predetermined time interval, the plurality of images may be grouped and stored. Also, when an obtained image is out of focus or when an unintended object has been imaged, the controller 17 may not store the corresponding image.

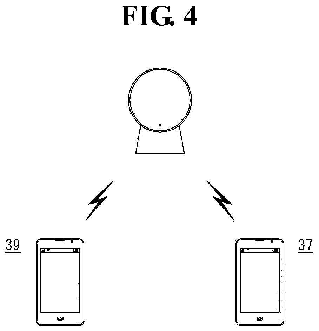

FIG. 4 is a view illustrating the relations between the electronic device of FIG. 1 and external devices.

As illustrated in FIG. 4, the electronic device 10 according to an embodiment of the present invention may communicate with one or more external devices 31 to 39.

The electronic device 10 may be positioned at a predetermined spot to cover a predetermined space. For example, the electronic device 10 may be positioned in a house or office. When the electronic device 10 is positioned in a house, the camera 11 included in the electronic device 10 may be positioned to image a living room.

The electronic device 10 may be in a state of communicating with the external devices 31 to 39 around the electronic device 10. For example, the electronic devices 31 to 39 may be external devices which have been registered in the electronic device 10. Or, the external devices 31 to 39 may be external devices positioned within a predetermined distance from the electronic device 10. Or, the external devices 31 to 39 may be external devices with which user's tagging operation has been performed such that the external devices may communicate with the electronic device 10.

The external devices 31 to 39 may be various types of devices. The external devices may include a camera, respectively. In other words, the external devices 31 to 39 may be devices that may capture a still image and/or video upon receiving a control signal from the electronic device 10.

The external devices 31 to 39 may capture different areas, respectively. For example, when first to fifth external devices 31 to 39 are positioned in a living room, the first to fifth external devices 31 to 39 may image different areas of the living room, respectively. Thus, when images captured by the first to fifth external devices 31 to 39 are combined, an image of the entire area of the living room, without a blind spot, may be obtained

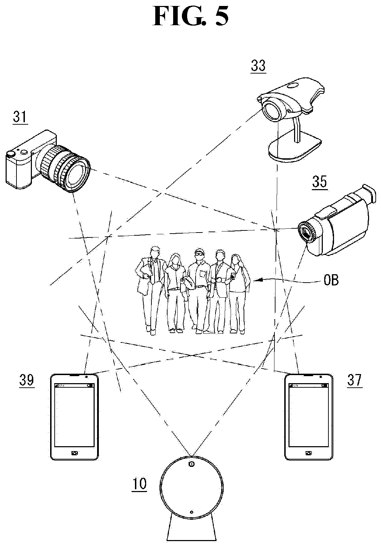

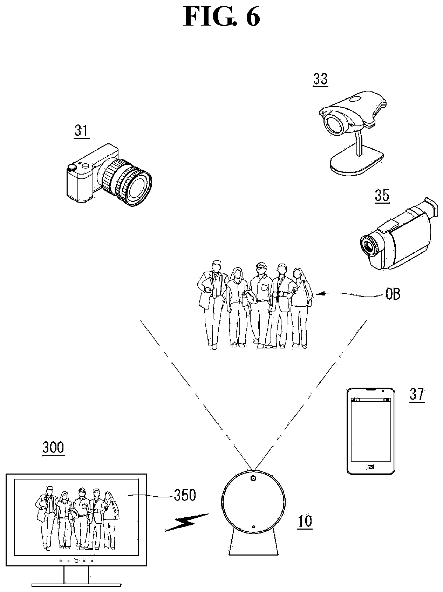

FIGS. 5 and 6 are views illustrating operations of the electronic device of FIG. 1 and external devices.

As illustrated in FIGS. 5 and 6, the electronic device 10 according to an embodiment of the present invention may capture an image using the built-in camera 11 thereof. The electronic device 10 may display the captured image through a display device 300.

As illustrated in FIG. 5, the electronic device 10 and the first to fifth external devices 31 to 39 may image an object (OB) such as people, or the like.

Since the positions of the electronic device 10 and the first to fifth external devices 31 to 39 are different, angles at which the object OB, a particular object, is imaged may be different. The controller 17 of the electronic device 10 and/or the user may store the entirety or a portion of images captured at different angles. Since images are captured at different angles simultaneously or at every predetermined time interval, more lively images may be obtained. Also, since the first to fifth external devices 31 to 39 are collectively controlled through the electronic device 10, images may be more conveniently obtained. In addition, since the captured images are collectively managed by the electronic device 10, the images may be effectively stored and/or transmitted.

When the electronic device 10 is in a particular operation mode such as a party shot mode, the electronic device 10 may control the external devices 31 to 39 to perform imaging.

As illustrated in FIG. 6, an image captured by a particular device, among the electronic device 10 and the first to fifth external devices 31 to 39, may be displayed through the display device 300. For example, an image captured by the electronic device 10, among the captured images, may be displayed on the display device 300. The electronic device 10 and the display device 300 may be connected in a wired manner and/or wirelessly.

Captured images may be displayed simultaneously when the images are captured or at every predetermined time interval. For example, when the object OB and the display device 300 are positioned in a living room, captured images may be immediately displayed on a display 350 of the display device 300 so as to be checked simultaneously when the images are captured.

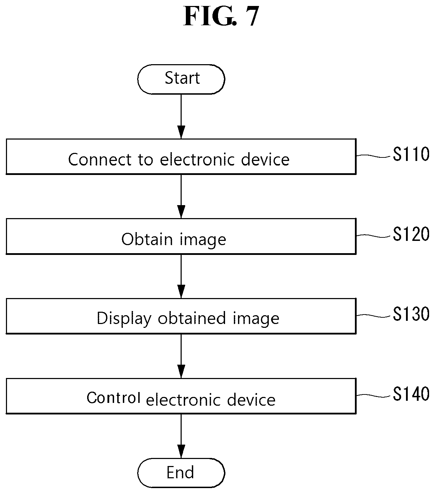

FIG. 7 is a flow chart illustrating an operation of a terminal according to an embodiment of the present invention.

As illustrated in FIG. 7, a terminal 100 may be connected to the electronic device 10 in step S110.

The terminal 100 may be various types of terminals. For example, the terminal 100 may be an electronic device having a function of communicating with an external device such as a portable electronic device, a notebook computer, a personal computer (PC), or the like.

The terminal 100 may be connected to the electronic device 10, when the electronic device 10 first requests the connection or when the terminal 100 first requests the connection. For example, when the terminal 100 is recognized as having entered a predetermined region from the electronic device 10, the electronic device 10 may first request the terminal 100 to be connected thereto. Or, when the user shakes the terminal 100 in a particular pattern, when the user manipulates the terminal 100, or when a particular control signal is generated by a controller of the terminal 100, the terminal 100 may first request connection to the electronic device 10.

When the electronic device 10 and the terminal 100 are connected, an image may be obtained from the electronic device in step S120 and the obtained image may be displayed in step S130.

The electronic device 10 may have obtained various images from the external devices 31 to 39 including the terminal 100 and stored the same. The terminal 100 may request and receive an image from the electronic device 10 or may receive an image from the electronic device 10 in response to a request from the electronic device 10.

The terminal 100 may display a received image on a display of the terminal 100. The terminal 100 may display an image according to each of specific events. For example, images captured at different angles and/or different points in time according to occurrence of a specific event may be edited into a single image and displayed.

The electronic device 10 may be controlled in step S140.

The user may control the electronic device 10 using the terminal 100. For example, the user may adjust a setting of the electronic device 10 or a transmission time, a transmission method, or the like, stored in the electronic device 10.

The user or the controller of the terminal 100 may adjust any other external device connected to the electronic device. For example, the user or the controller of the terminal 100 may activate or deactivate a particular external device or change a setting of a particular external device.

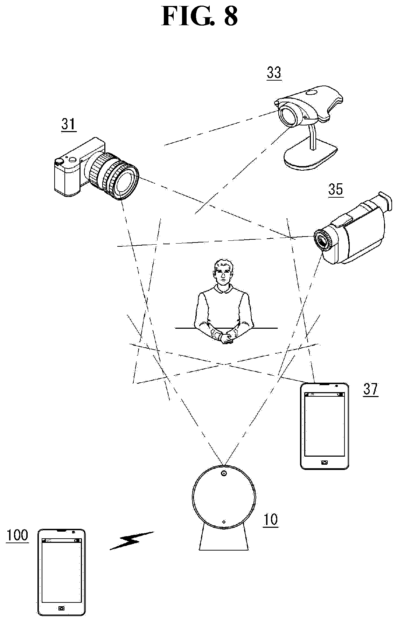

FIGS. 8 through 10 are views illustrating a process of controlling an electronic device using a terminal of FIG. 7.

As illustrated in FIGS. 8 through 10, the electronic device 10 may be controlled through the terminal 100 manipulated by the user.

As illustrated in FIG. 8, a particular object may be imaged through the first to fourth external devices 31 to 37 connected to the electronic device 10. Also, the terminal 100 manipulated by the user may be connected to the electronic device 10.

Based on a control signal generated by the electronic device 10, the electronic device 10 and the first to fourth external devices 31 to 37 may perform an imaging operation of the object. An image, a product of imaging the object, may be transmitted to the electronic device 10. The image transmitted to the electronic device 10 may be transmitted to the terminal 100 manipulated by the user.

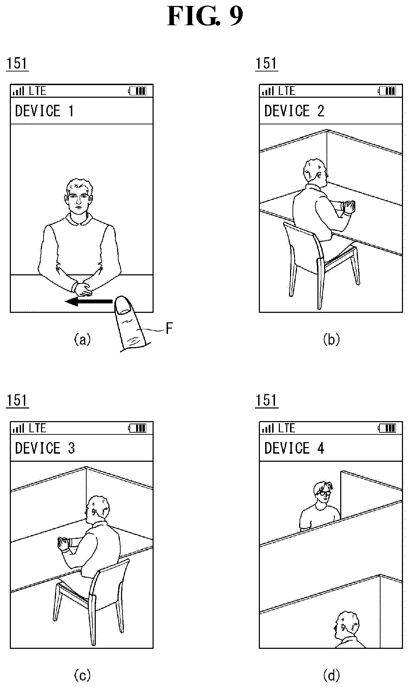

As illustrated in (a) of FIG. 9, one of images received from the electronic device 10 may be displayed on the display 151 of the terminal 100. For example, an image captured by and transmitted from the electronic device 10 may be displayed. When the display 151 is touched, the image captured by an external device may be displayed.

As illustrated in (b) of FIG. 9, an image received from the electronic device 10, which was captured by the first external device 31, may be displayed on the display 151 of the terminal 100 according to user manipulation.

As illustrated in (c) o FIG. 9, an image received from the electronic device 10, which was captured by the second external device 35, may be displayed on the display 151 of the terminal 100 according to user manipulation.

As illustrated in (d) of FIG. 9, an image received from the electronic device 10, which was captured by the third external device 33, may be displayed on the display 151 of the terminal 100 according to user manipulation. In this case, the third eternal device 33 may be in a state of not facing the particular object as an imaging target. As a result, an image obtained by capturing a portion other than the user-intended object may be transmitted to the terminal 100.

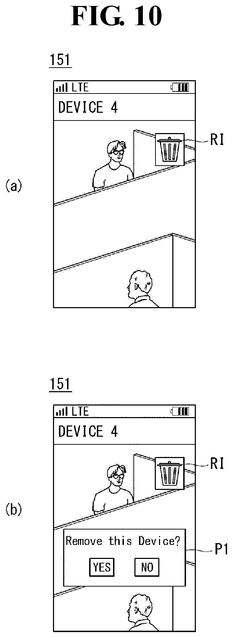

As illustrated in (a) of FIG. 10, a device removal icon RI may be displayed on the display 151.

As illustrated in (b) of FIG. 10, when the device removal icon RI is selected, a first pop-up window P1 may be displayed. In other words, whether to exclude an external device which has captured a corresponding image may be determined. The external device excluded through this process may be excluded from imaging of the corresponding object until when a particular manipulation is performed. Thus, a phenomenon that a portion not intended by the user is continuously imaged may be fundamentally eliminated.

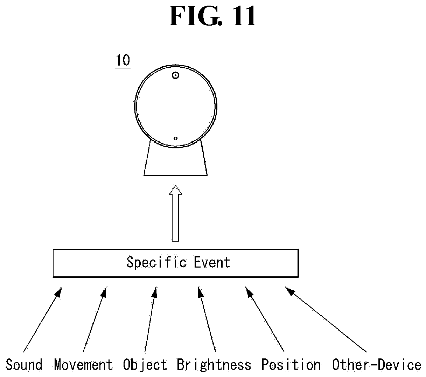

FIG. 11 is a view illustrating an example of a specific event.

As illustrated in FIG. 11, various specific events may occur in the electronic device 10.

A specific event may be related to a sound. For example, when a specific sound such as singing for Happy birthday , "surprise!", "Bottoms up!", "O my!", laughter, "firecrackers, or the like, is sensed, the controller 17 may determine that a specific event has occurred.

A specific event may be related to a movement. For example, a behavior such as dancing, a big movement of a joint, a movement of hand such as clapping, making a pre-set specific gesture, or the like, is sensed, the controller 17 may determine that a specific event has occurred.

A specific event may be related to an object. For example, when a cake, a candlelight, a cap for a party, wine glasses, or the like, is imaged, the controller 17 may determine that a specific event has occurred.

The specific event may be related to brightness. For example, when a rapid change in brightness when a flash emits light, a rapid fade-out/in of ambient brightness, or the like, is sensed, the controller 17 may determine that a specific event has occurred.

A specific event may be related to a position. For example, a face of a person that is getting near, while being gradually increased in size, a person located within a photo zone, or the like, is sensed, the controller 17 may determine that a specific event has occurred.

A specific event may be related to any other device. For example, when a camera imaging control command is received from any other device, the controller 17 may determine that a specific event has occurred.

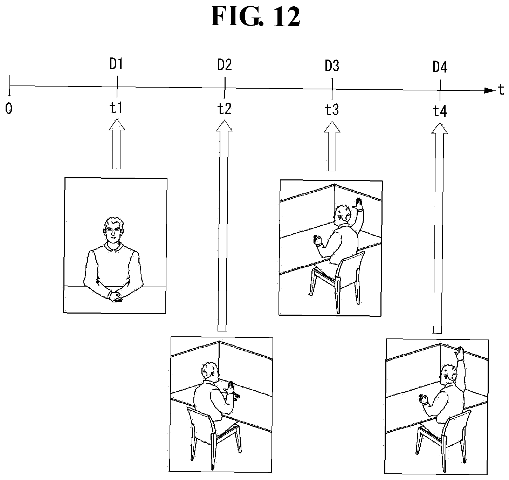

FIGS. 12 through 15 are views illustrating an operation of a camera of an external device according to a specific event.

As illustrated in FIGS. 12 through 15, an external device may image an object in various manners.

As illustrated in FIG. 12, the electronic device 10 may transmit a control command to external devices D1 to D4 that face a specific object, to enable the external devices D1 to D4 to sequentially image the specific object at different points in time.

Upon receiving the control command, the external devices D1 to D4 may image the object at points in time t1 to t4. Namely, the external devices D1 to D4 may sequentially image the object in a clockwise direction or in a counterclockwise direction.

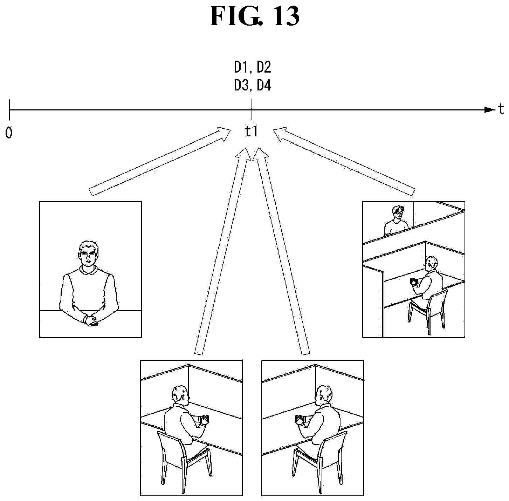

As illustrated in FIG. 13, the electronic device 10 may transmit a control command to the external devices D1 to D4 that face the specific object, to enable the external devices D1 to D4 to image the specific object at the same point in time.

Upon receiving the control command, the external devices D1 to D4 may image the object at a point in time t1. Namely, the external devices D1 to D4 may image the object at various angles at a particular point in time.

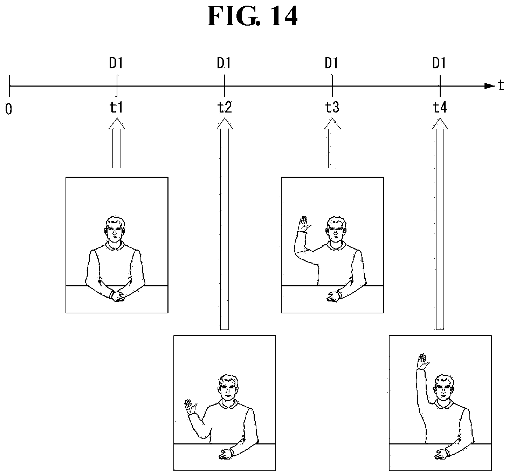

As illustrated in FIG. 14, the electronic device 10 may transmit a control command to the external device D1 that faces the specific object, to enable the external device D1 to image the specific object at different points in time.

Upon receiving the control command, the external device D1 may image the specific object at points in time t1 to t4.

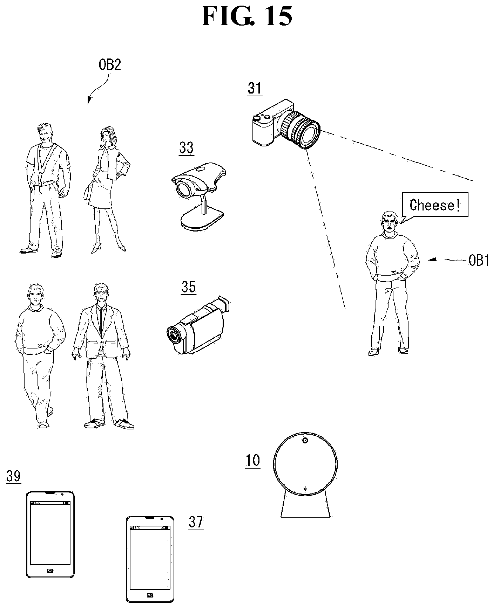

As illustrated in FIG. 15, the electronic device 10 may control an external device to selectively image a specific object over which a specific event has occurred.

External devices connected to the electronic device 10 may include first to fifth eternal devices 31 to 39. Among the first to fifth external devices 31 to 39, the first eternal device 31 may face a first object OB1 and the other external devices may face a second object OB2.

The first object OB1 may say "Cheese!" at a particular point in time. Namely, the first object OB1 may express that he or she is read for photographing. When a sound from the first object OB1 is recognized, the electronic device 10 may command the first external device 31 to image the first object OB1. In other words, only the particular external device, apart from the other external devices, may operate.

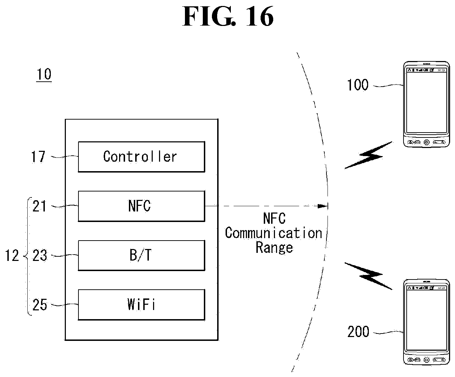

FIGS. 16 through 18 are views illustrating operations of a terminal connected through tagging.

As illustrated in FIGS. 16 through 18, the electronic device 10 may start NFC communication with terminals 100 and 200 that have entered a predetermined area.

The terminals 100 and 200 and the electronic device 10 may be certain electronic devices supporting NFC communication. For example, the terminals 100 and 200 and the electronic device 10 may be mobile terminals such as a cellular phone, a smartphone, a tablet PC, or the like, that support NFC communication or may be electronic devices such as a printer, a TV, a DTV, a computer, an audio device, or the like. Hereinafter, an electronic device having an NFC communication function may be referred to as an NFC electronic device.

The electronic device 10 may include a controller 17 and a communication module 12 including an NFC module 21, a Bluetooth communication module 23, and a Wi-Fi communication module 25.

The controller 17 may control the components within the electronic device 10. The NFC module 21 may establish an NFC link with the terminals 100 and 200 supporting FNC communication. The NFC module 21 may be referred to as an NFC forum device. The NFC module 21 may be referred to as an NFC means.

The NFC module 21 may establish an NFC link through tagging with NFC modules of the terminals 100 and 200 within an NFC communication range.

The NFC module 21 may communicate with the terminals 100 and 200 through various modes. For example, the various modes may include a card emulation mode, a reader mode, a peer-to-peer mode.

When the NFC module 21 of the electronic device 10 operates in the card emulation mode, the NFC module 21 may serve as a card, namely, a tag. In this case, the NFC modules of the terminals 100 and 200 may operate in the reader mode to obtain data from the NFC module 21 of the electronic device 10.

When the NFC module 21 of the electronic device 10 operates in the reader mode, the NFC module 21 may serve as a reader. In this case, the NFC module 21 of the electronic device 10 may obtain data from the NFC modules of the terminals 100 and 200 operating in the emulation mode.

When the NFC module 21 of the electronic device 10 operates in the peer-to-peer mode, the NFC module of the electronic device 10 and the NFC modules of the terminals 100 and 200 may exchange data with each other.

A mode of the NFC module 21 may be determined according to a predetermined reference. For example, a mode of the NFC module 21 may be set according to a user input or a predetermined algorithm.

After the electronic device 10 establishes an NFC link with the terminals 100 and 200 through the NFC module 21, the electronic device 10 may also establish a different type of communication link from the NFC link through the Bluetooth communication module 23 and/or the Wi-Fi communication module 25. In this case, although the NFC link is cut off, the electronic device 10 may continue to perform data communication with the terminals 100 and 200 through the Bluetooth communication link and/or Wi-Fi communication link.

The array of processes of establishing a communication link for the electronic device 10 to continuously perform communication with the terminals 100 and 200 using a different wireless communication technique will be referred to as handover.

It can be noted that the electronic device 10 may perform handover from the NFC link to the Bluetooth communication link or the Wi-Fi communication. For example, the electronic device 10 may perform handover to various communication links such as a radio frequency identification (RFID) communication link, a wireless gigabit (WiGig) communication link, or the like.

Although not shown in FIG. 5, the terminals 100 and 200 may include components corresponding to those of the electronic device 10. In other words, the terminals 100 and 200 may include a controller, an NFC module, a Bluetooth communication module, a Wi-Fi communication module, and the like.

In other words, handover refers to that the electronic device 10 establishes an NFC link with the terminals 100 and 200, and thereafter, the electronic device 10 establishes a different communication link to perform data communication, and here, the user may easily establish an NFC link through NFC tagging between the electronic device 10 and the terminals 100 and 200 and change a communication means to a remote link farther than the NFC link or a communication link appropriate for transmission of high capacity data.

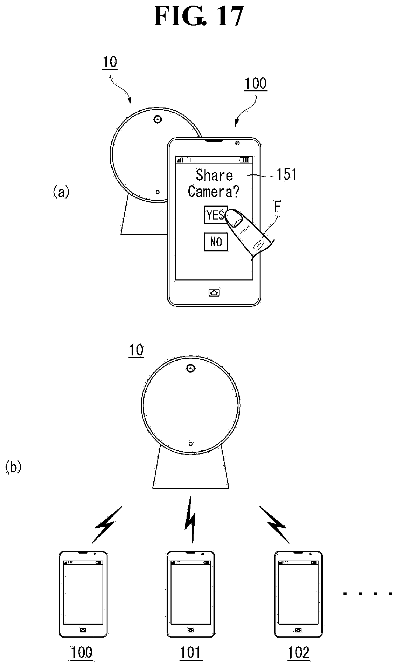

As illustrated in (a) of FIG. 17, the user of the terminal 100 may tag the terminal 100 to the electronic device 10. A message ascertaining whether to share data may be displayed on the display 151 of the terminal 100 tagged to the electronic device 10.

As illustrated in (b) of FIG. 17, first to third terminals 100, 101, and 102 set to share data through a tagging operation may be placed in a state in which they transmit and receive captured images, or the like, to and from the electronic device 10.

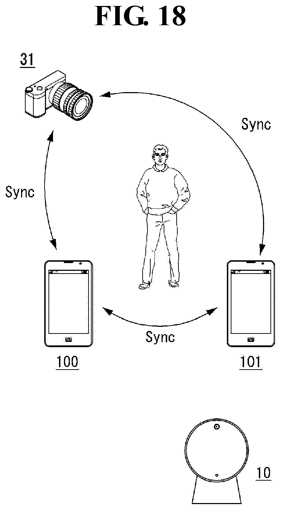

As illustrated in FIG. 18, the first external device 31 and the first and second terminals 100 and 101 set to share data through a tagging operation may be synchronized to perform a predetermined operation. Namely, the first external device 31 and the first and second terminals 100 and 101 may perform a synchronized operation upon receiving a control command from the electronic device 10. For example, the first external device 31 may include a flash. When the flash of the first external device 31 is turned on, a clearer image may be captured. Thus, the electronic device 10 may enable the first and second terminals 100 and 101 to perform image capturing at a point in time at which the first external device 31 is turned on to emit light

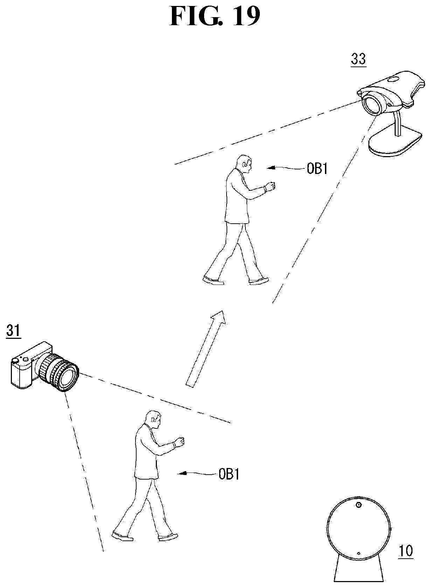

FIGS. 19 through 21 are views illustrating operations regarding a particular person.

As illustrated in FIGS. 19 through 21, the electronic device 10 may track a specific object to obtain a predetermined result.

As illustrated in FIG. 19, a specific person may be set as a first object OB1. The electronic device 10 may image a flow of human traffic of the first object OB1 through the first and second external devices 31 and 33 disposed in the flow of human traffic. The specific person may be identified by applying a technique such as face recognition, or the like.

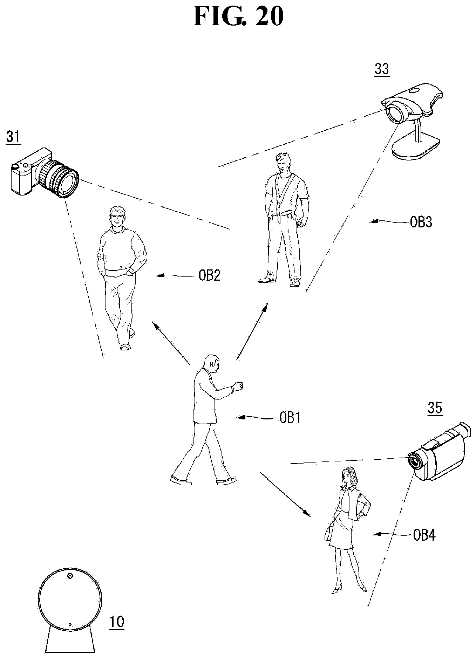

As illustrated in FIG. 20, when the flow of human traffic of the first object OB1 is tracked, data regarding which of second to fourth objects OB2 to OB4 the first object OB1 contacts may be obtained. For example, data regarding who, when, and to which degree, the first object OB1 has contacted may be obtained. The obtained data may be utilized as basic data for determining affinity, or the like, between people. The obtained data may be stored in the electronic device 10.

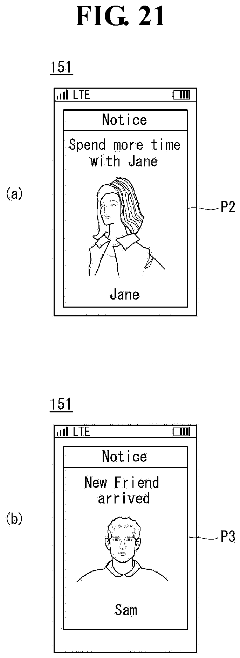

As illustrated in (a) of FIG. 21, a comment indicating a relationship with a specific person may be provided to the user of the terminal 100 based on the tracking data with respect to the person. For example, when contact frequency with a person called Jane tends to be reduced, a pop-up window P2 indicating the corresponding fact may be displayed on the display 151 of the terminal 100. Thus, the user of the terminal 100 may be alerted to improvement of the relationship with the corresponding person.

As illustrated in (b) of FIG. 21, a comment indicating that a particular person has entered a predetermined area of the user of the terminal 100 may be provided. For example, when a person called Sam newly attends a party, a corresponding fact may be displayed on the display 151. Thus, the user of the terminal 100 may be alerted to searching for the corresponding person and promotion of the relationship.

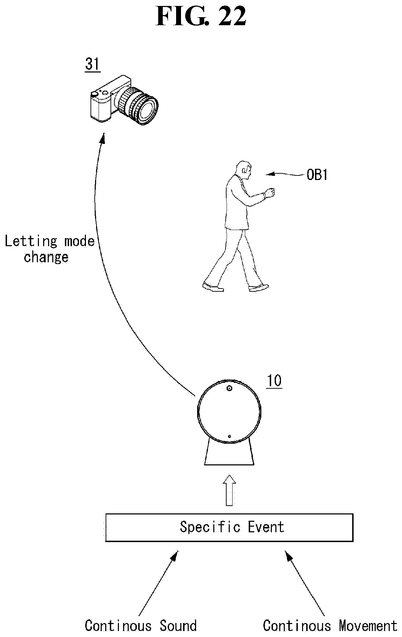

FIG. 22 is a view illustrating controlling of an external device according to occurrence of an event.

As illustrated in FIG. 22, when a specific event occurs, the electronic device 10 may change an operation mode of an external device. Accordingly, the external device may be optimized for the generated event and operated.

The specific event may be a continuous sound. For example, when music for happy birthday continues or when laughter is continuously sensed, the first external device 31 may be changed from a still image capture mode to a video capture mode.

The specific event may be a continuous movement. For example, when dancing continues or when clapping is continuously sensed, the first external device may be changed to a video capture mode.

When the corresponding specific event is terminated, the changed image captured mode may be changed back to a general mode.

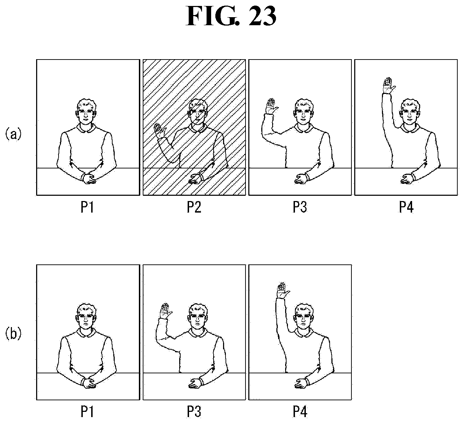

FIGS. 23 through 26 are views illustrating processing of captured images.

As illustrated in FIGS. 23 through 26, the electronic device 10 may perform an editing operation on a captured image.

As illustrated in (a) of FIG. 23, first to fourth images P1 to P4 may have been captured. Among the captured images, the second image P2 may not have been normally captured.

As illustrated in (b) of FIG. 23, the electronic device 10 may automatically delete an image which has not been normally captured. Namely, the electronic device 10 may automatically remove an image not appropriate to be stored and/or shared simultaneous when the image is captured or during post-process after the image is captured. Thus, an inappropriate image may be prevented from being stored or shared in advance.

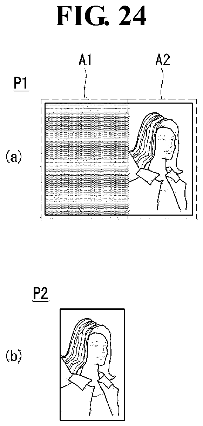

As illustrated in (a) of FIG. 24, a first area A1 of a first image P1 obtained by imaging a specific person may be covered.

As illustrated in (b) of FIG. 24, the controller 17 of the electronic device 10 may cut away the first area A1 which is covered to be useless, and selectively store only the second area A2. Thus, a storage space may be effectively used.

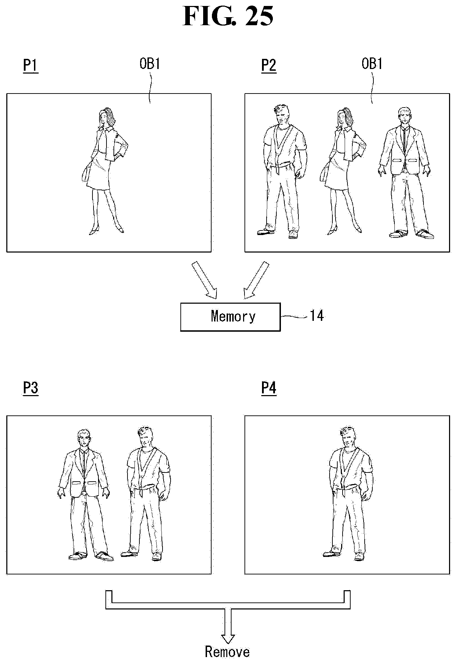

As illustrated in FIG. 25, the controller 17 of the electronic device 10 may selectively store only an image including a specific object.

The first to fourth images P1 to P4 may be transmitted to the electronic device 10. The electronic device 10 may store only an image including a specific object, among the received images. For example, the electronic device 10 may store only the first and second images P1 and P2 including a first object OB1, a particular person, in the memory 14 and remove the third and fourth images P3 and P4 not including the first object OB1.

A specific object to be stored may be set beforehand or afterhand. For example, a specific person may be selected beforehand and/or afterhand and an image including the person may not be stored. The specific person, or the like, may be identified from a captured image through an image processing method, such as face recognition, or the like, with respect to the pre-set specific person.

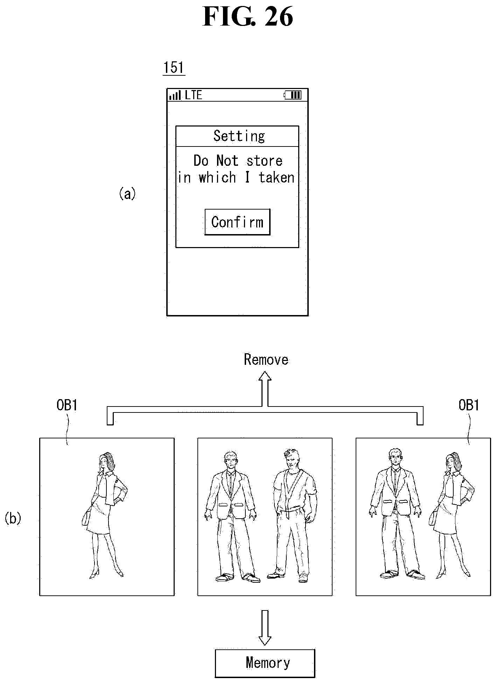

As illustrated in (a) of FIG. 26, the user of the terminal 100 may not store an image including the owner of the terminal.

As illustrated in (b) of FIG. 26, an image including the first object OB1, a specific person, may not be stored but be removed. The removed image may include an image captured by the owner of the terminal 100 and an image including the owner of the terminal 100 captured by an external device by chance, as well.

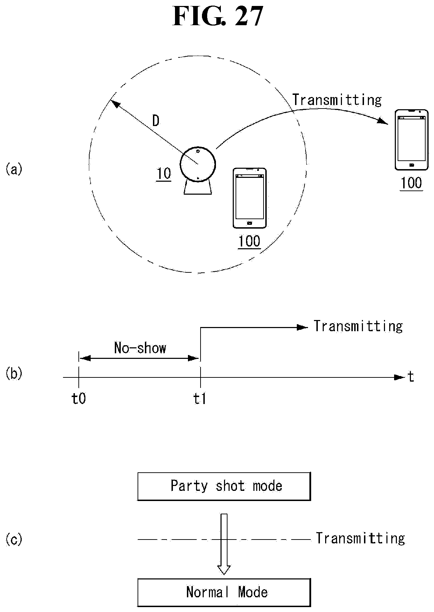

FIG. 27 is a view illustrating a point in time at which data is transmitted from an electronic device to a terminal.

As illustrated in FIG. 27, the electronic device 10 according to an embodiment of the present invention may transmit data to the terminal 100 at various points in time.

As illustrated in (a) of FIG. 27, the terminal 100 may be positioned within a predetermined radius D from the electronic device 10 or may be positioned outside of the predetermined radius D from the electronic device 10. When the terminal 100 moves out of the predetermined radius D, the electronic device 10 may determine that the owner of the terminal 100 leaves a corresponding party or gathering. Thus, the electronic device 10 may transmit an image stored after being obtained from the terminal 100 and the external device to the terminal 100.

As illustrated in (b) of FIG. 27, the owner of the terminal 100 may not be imaged from a point in time t0 to a point in time t1. In this case, the electronic device 10 may determine that the owner of the corresponding terminal 100 has left the party or the gathering. Thus, the electronic device 10 may transmit the stored image to the terminal 100.

As illustrated in (c) of FIG. 27, an operation mode of the electronic device 10 may be changed. For example, before a party or gathering starts, the user may change an operation mode of the electronic device 10. Namely, the operation mode of the electronic device 10 may be changed to a party shot mode in which an image is captured and/or stored. When the party or gathering is finished, the user may change the operation mode of the electronic device 10 to a normal mode. When the operation mode of the electronic device 10 is changed, the electronic device 10 may transmit a stored image.

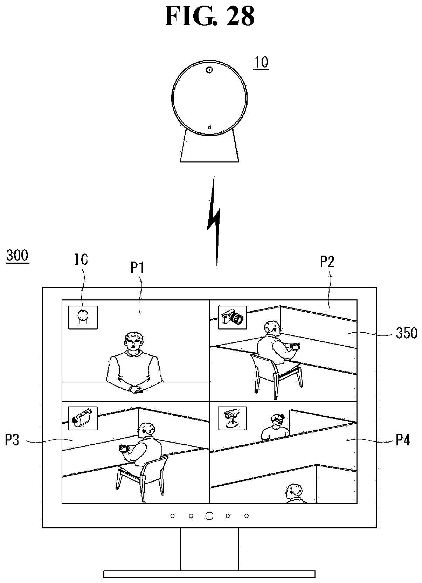

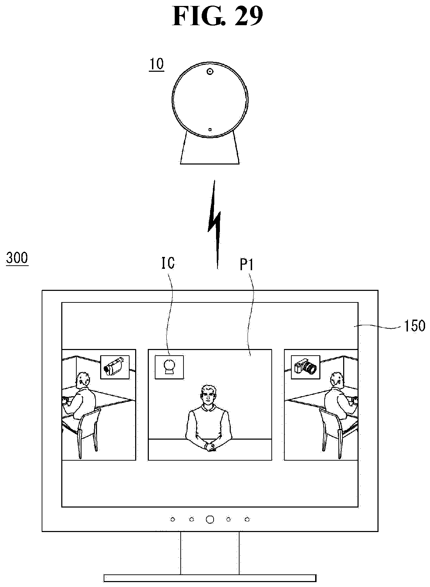

FIGS. 28 and 29 are views illustrating a method for displaying images stored in an electronic device.

As illustrated in FIGS. 28 and 29, images stored in the electronic device 10 may be displayed in various manners.

As illustrated in FIG. 28, the display device 300 may receive stored images from the electronic device 10. The received images may be displayed together with external devices used to capture the images on the display device 300. For example, first to fourth images P1 to P4 related to a specific event may be displayed on a single screen. Icons IC indicating external devices respectively used to capture the images may also be displayed in the displayed first to fourth images P1 to P4. Thus, the user may easily recognize which images have been captured at the specific event and by which devices the images have been captured.

As illustrated in FIG. 29, the display device 300 may display images received from the electronic device 10 in a panorama form. Namely, the display device 300 may sequentially display the images related to a specific event. Displaying the images captured at the same point in time or at a point in time adjacent thereto in a panorama form may help the user recall memories related to the corresponding event. Icons indicating by which devices the images have been captured may be added to the displayed images.

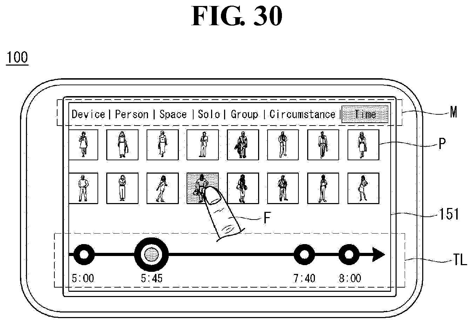

FIGS. 30 through 33 are views illustrating a method for displaying received images.

As illustrated in FIG. 30, an image gallery may be configured to effectively display images received from the electronic device 10.

The image gallery may be expressed differently according to an operation mode of the electronic device 10 and/or the received terminal. For example, when the electronic device 10 and/or the terminal is in a specific mode such as a party shot mode, a corresponding image gallery may be displayed, and when the electronic device 10 and/or the terminal is in a normal mode, or the like, a general image gallery format may be displayed. Hereinafter, it is assumed that the electronic device 10 and/or the terminal are in a particular mode such as a party shot mode.

A selection menu M may be illustrated in an upper end of the image gallery. The selection menu M may include a DEVICE tap for selecting whether to activate each external device, a PERSON tap for searching for an image including or not including a specific person, a SPACE tap discriminately displaying a captured point, a SOLE tap for searching for a captured image including only a specific person, a GROUP tap for searching for a group image, a CIRCUMSTANCE tap for searching for an image according to each specific event, a TIME tap for searching for images according to time order, and the like.

When the TIME tap is selected, a time line TL may be displayed on the display 151. The time line TL may include a point in time at which a specific event occurred and imaged. For example, when a 5:45 portion is selected, an image P captured at the time may be displayed on the display 151.

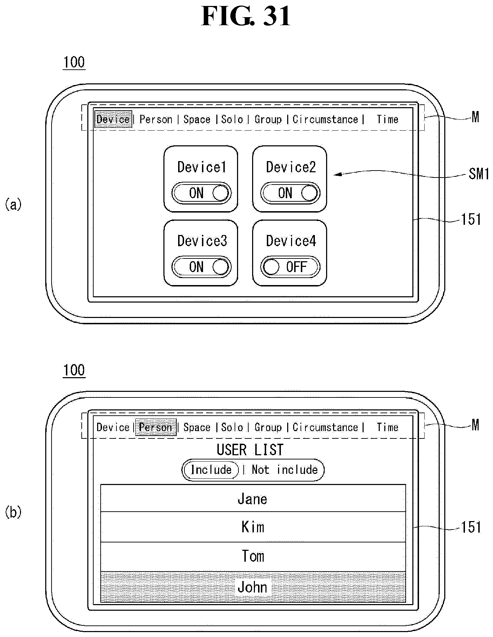

As illustrated in (a) of FIG. 31, when the DEVICE tap is selected, selection buttons SM1 for selecting whether to activate a specific external device may be displayed on the display 151. The user may control a specific external device to capture an image or not by manipulating the selection button SM1.

As illustrated in (b) of FIG. 31, when the PERSON tap is selected, a list UN of specific persons may be displayed on the display 151. A name on the list UN may be selected to selectively display only an image including or not including a specific person.

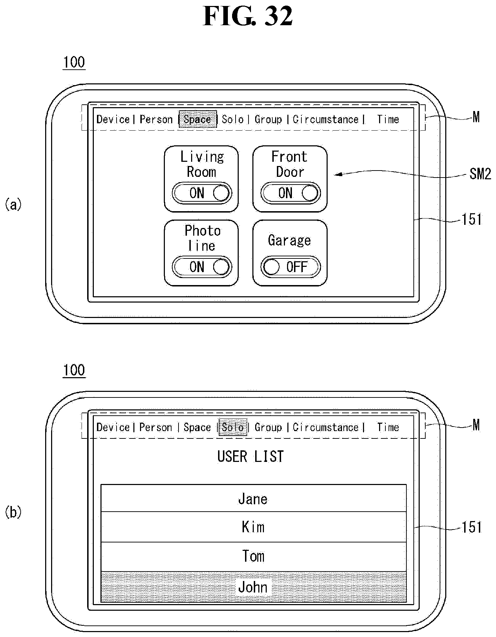

As illustrated in (a) of FIG. 32, when the SPACE tap is selected, selection buttons SM2 for activating or deactivating an external device positioned in a pre-set specific area may be displayed. For example, when a "Garage" is turned off, an external device installed in the garage may be deactivated so as not to be imaged.

As illustrated in (b) of FIG. 32, when the SOLE tap is selected, a list UN of specific persons may be displayed.

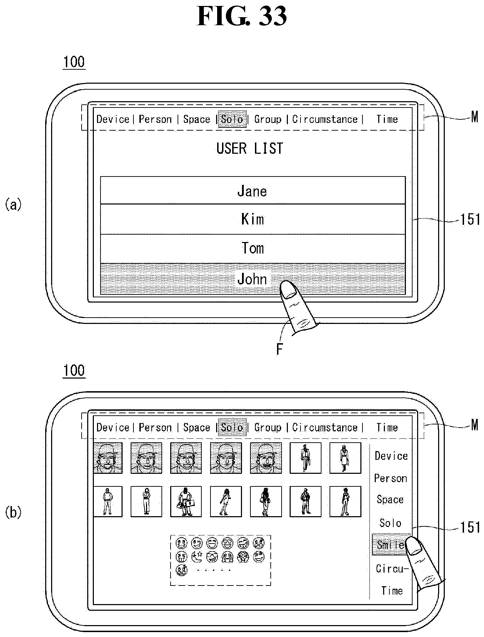

As illustrated in (a) of FIG. 33, a specific person on the list UN may be selected by a finger F, or the like.

As illustrated in (b) of FIG. 33, images related to a specific selected person may be displayed. Namely, among images received from the electronic device 10, only images including John may be selectively displayed. In addition, a sub-menu related to the specific person may be selected. For example, when a menu "Smile" is selected, an image in which John smiles may be displayed.

The above-described method of controlling the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

A mobile terminal may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method may be provided of controlling a mobile terminal that includes displaying a first object on the first touch screen, displaying a second object on the second touch screen, receiving a first touch input applied to the first object, and linking the first object to a function corresponding to the second object when a second touch input applied to the second object is received while the first touch input is maintained.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

## Claims

1. An electronic device (10) comprising:
a memory (14);
a communication module (12) connected wirelessly to at least one external device (31 to 39), the at least one external device (31 to 39) having a camera, to exchange data with the at least one external device (31 to 39); and
a controller (17) configured to, when a specific event occurs, enable the camera included in an external device (31 to 39), which is connected to the communication module (12), through the communication module (12) to capture an image, obtain the captured image, and store the obtained image in the memory (14),
wherein the electronic device is adapted to communicate with a mobile terminal (100),
**characterized in that** the controller (17) is configured to identify a specific person from a captured image through an image processing method with respect to the pre-set specific person,
and the controller (17) is further configured to transmit the image stored in the memory (14) to the mobile terminal (100) when it is determined based on the image processing method that the owner of the mobile terminal (100) is not imaged from a point in time t0 to a point in time t1.

2. The electronic device of claim 1, further comprising:
at least one of a camera (11) configured to capture an image around the electronic device (10), a microphone (13) configured to sense a sound generated around the electronic device (10), and a sensing module (16) including at least one of a touch sensor and a proximity sensor to sense a change in an environment around the electronic device (10).

3. The electronic device of claim 1 or 2, wherein the specific event is at least one of a change in a sound, a change in a type of an object included in the image, a change in a position of an object included in the image, and a change in brightness of the image.

4. The electronic device of anyone of preceding claims, wherein the at least one external device (31 to 39) is a device authenticated in advance to perform communication with the electronic device (10), and the authenticating starts when the at least one external device (31 to 39) enters a predetermined area from the electronic device (10).

5. The electronic device of anyone of preceding claims, wherein a plurality of external devices (31 to 39) are provided, and the controller (17) is configured to enable the plurality of external devices to capture images of a specific subject under at least one of conditions among different angles and different points in time, respectively.

6. The electronic device of anyone of preceding claims, wherein the controller (17) combines the plurality of images of the specific subject captured under the at least one condition into a single image and stores the single image.

7. The electronic device of anyone of preceding claims, wherein when a situation in which an operation mode of the electronic device (10) is changed, occurs, the controller transmits the image stored in the memory to the at least one external device (31 to 39).

8. The electronic device of anyone of preceding claims, wherein the at least one external device (31 to 39) includes a first external device and a second external device comprising a camera, and the controller (17) controls a camera of the second external device based on a control command from the first external device.

9. The electronic device of anyone of preceding claims, wherein when the electronic device (31 to 39) is in a specific operation mode, the controller (17) captures an image through a camera of the at least one external device (31 to 39).

## Patentansprüche

1. Elektronische Einrichtung (10), die Folgendes enthält:
einen Speicher (14);
ein Kommunikationsmodul (12), das mit mindestens einer externen Einrichtung (31 bis 39) drahtlos verbunden ist, um Daten mit der mindestens einen externen Einrichtung (31 bis 39) auszutauschen, wobei die mindestens eine externe Einrichtung (31 bis 39) eine Kamera besitzt; und
eine Steuereinheit (17), die konfiguriert ist, dann, wenn ein bestimmtes Ereignis eintritt, die Kamera, die in einer externen Einrichtung (31 bis 39), die mit dem Kommunikationsmodul (12) verbunden ist, enthalten ist, durch das Kommunikationsmodul (12) zu aktivieren, ein Bild aufzunehmen, das aufgenommene Bild zu erhalten und das erhaltene Bild im Speicher (14) zu speichern, wobei
die elektronische Einrichtung ausgelegt ist, mit einem mobilen Endgerät (100) zu kommunizieren,
**dadurch gekennzeichnet, dass** die Steuereinheit (17) konfiguriert ist, eine bestimmte Person über ein Bildverarbeitungsverfahren in Bezug auf die voreingestellte bestimmte Person aus einem aufgenommenen Bild zu identifizieren, und
die Steuereinheit (17) ferner konfiguriert ist, das im Speicher (14) gespeicherte Bild zum mobilen Endgerät (100) zu senden, wenn auf der Grundlage des Bildverarbeitungsverfahrens bestimmt wird, dass der Besitzer des mobilen Endgeräts (100) von einem Zeitpunkt t0 bis zu einem Zeitpunkt t1 nicht abgebildet wird.

2. Elektronische Einrichtung nach Anspruch 1, die ferner Folgendes enthält:
mindestens eine Kamera (11), die konfiguriert ist, ein Bild um die elektronische Einrichtung (10) aufzunehmen, ein Mikrophon (13), das konfiguriert ist, einen Schall, der um die elektronische Einrichtung (10) erzeugt wird, zu erfassen, und ein Erfassungsmodul (16), das einen Berührungssensor und/oder einen Näherungssensor enthält, um eine Änderung in einer Umgebung um die elektronische Einrichtung (10) zu erfassen.

3. Elektronische Einrichtung nach Anspruch 1 oder 2, wobei das bestimmte Ereignis eine Änderung von Schall und/oder eine Änderung eines Typs eines Gegenstandes, der im Bild enthalten ist, und/oder eine Änderung einer Position eines Gegenstandes, der im Bild enthalten ist, und/oder eine Änderung der Helligkeit des Bildes ist.

4. Elektronische Einrichtung nach einem der vorhergehenden Ansprüche, wobei die mindestens eine externe Einrichtung (31 bis 39) eine Einrichtung, die im Voraus authentifiziert wurde, um Kommunikation mit der elektronischen Einrichtung (10) durchzuführen, ist und die Authentifizierung beginnt, wenn die mindestens eine externe Einrichtung (31 bis 39) in einen von der elektronischen Einrichtung (10) vorgegebenen Bereich eintritt.

5. Elektronische Einrichtung nach einem der vorhergehenden Ansprüche, wobei mehrere externe Einrichtungen (31 bis 39) vorgesehen sind und die Steuereinheit (17) konfiguriert ist, die mehreren externen Einrichtungen zu aktivieren, um Bilder von einem bestimmten Motiv unter mindestens einer Bedingung unter verschiedenen Winkeln bzw. verschiedenen Zeitpunkten aufzunehmen.

6. Elektronische Einrichtung nach einem der vorhergehenden Ansprüche, wobei die Steuereinheit (17) die mehreren Bilder des bestimmten Motivs, das unter der mindestens einen Bedingung aufgenommen wurde, in ein einzelnes Bild kombiniert und das einzelne Bild speichert.

7. Elektronische Einrichtung nach einem der vorhergehenden Ansprüche, wobei dann, wenn eine Situation, in der ein Betriebsmodus der elektronischen Einrichtung (10) geändert wird, auftritt, die Steuereinheit das im Speicher gespeichert Bild zu der mindestens einen externen Einrichtung (31 bis 39) sendet.

8. Elektronische Einrichtung nach einem der vorhergehenden Ansprüche, wobei die mindestens eine externe Einrichtung (31 bis 39) eine erste externe Einrichtung und eine zweite externe Einrichtung, die eine Kamera enthält, enthält und die Steuereinheit (17) eine Kamera der zweiten externen Einrichtung auf der Grundlage einer Steueranweisung von der ersten externen Einrichtung steuert.

9. Elektronische Einrichtung nach einem der vorhergehenden Ansprüche, wobei dann, wenn die elektronische Einrichtung (31 bis 39) in einem bestimmten Betriebsmodus ist, die Steuereinheit (17) ein Bild durch eine Kamera von der mindestens einen externen Einrichtung (31 bis 39) aufnimmt.

## Revendications

1. Dispositif électronique (10) comprenant :
une mémoire (14) ;
un module de communication (12) raccordé sans fil à au moins un dispositif externe (31 à 39), l'au moins un dispositif externe (31 à 39) comportant une caméra, pour échanger des données avec l'au moins un dispositif externe (31 à 39) ; et
un organe de commande (17) configuré pour, lorsqu'un événement spécifique se produit, activer la caméra incluse dans un dispositif externe (31 à 39), qui est raccordée au module de communication (12), par l'intermédiaire du module de communication (12) pour acquérir une image, obtenir l'image acquise, et mémoriser l'image obtenue dans la mémoire (14),
dans lequel le dispositif électronique est apte à communiquer avec un terminal mobile (100),
**caractérisé en ce que** l'organe de commande (17) est configuré pour identifier une personne spécifique à partir d'une image acquise par l'intermédiaire d'un procédé de traitement d'image en ce qui concerne la personne spécifique prédéterminée,
et l'organe de commande (17) est en outre configuré pour transmettre l'image mémorisée dans la mémoire (14) au terminal mobile (100) lorsqu'il est déterminé, sur la base du procédé de traitement d'image, que le propriétaire du terminal mobile (100) n'est pas imagé depuis un point dans le temps t0 jusqu'à un point dans le temps t1.

2. Dispositif électronique selon la revendication 1, comprenant en outre :
au moins l'un d'une caméra (11) configurée pour acquérir une image autour du dispositif électronique (10), d'un microphone (13) configuré pour détecter un son généré autour du dispositif électronique (10), et d'un module de détection (16) comprenant au moins l'un d'un capteur tactile et d'un capteur de proximité pour détecter un changement dans un environnement autour du dispositif électronique (10).

3. Dispositif électronique selon la revendication 1 ou 2, dans lequel l'événement spécifique est au moins l'un d'un changement d'un son, d'un changement d'un type d'un objet inclus dans l'image, d'un changement d'une position d'un objet inclus dans l'image, et d'un changement de luminosité de l'image.

4. Dispositif électronique selon l'une quelconque des revendications précédentes, dans lequel l'au moins un dispositif externe (31 à 39) est un dispositif authentifié à l'avance pour effectuer une communication avec le dispositif électronique (10), et l'authentification commence lorsque l'au moins un dispositif externe (31 à 39) entre dans une zone prédéterminée à partir du dispositif électronique (10).

5. Dispositif électronique selon l'une quelconque des revendications précédentes, dans lequel une pluralité de dispositifs externes (31 à 39) sont prévus, et l'organe de commande (17) est configuré pour activer la pluralité de dispositifs externes pour acquérir respectivement des images d'un objet spécifique dans au moins l'une de conditions parmi différents angles et différents points dans le temps.

6. Dispositif électronique selon l'une quelconque des revendications précédentes, dans lequel l'organe de commande (17) combine la pluralité d'images du sujet spécifique acquis dans l'au moins une condition dans une image unique et mémorise l'image unique.

7. Dispositif électronique selon l'une quelconque des revendications précédentes, dans lequel, lorsqu'il se produit une situation dans laquelle un mode de fonctionnement du dispositif électronique (10) est changé, l'organe de commande transmet l'image mémorisée dans la mémoire à l'au moins un dispositif externe (31 à 39).

8. Dispositif électronique selon l'une quelconque des revendications précédentes, dans lequel l'au moins un dispositif externe (31 à 39) comprend un premier dispositif externe et un deuxième dispositif externe comprenant une caméra, et l'organe de commande (17) commande une caméra du deuxième dispositif externe sur la base d'une commande de contrôle provenant du premier dispositif externe.

9. Dispositif électronique selon l'une quelconque des revendications précédentes, dans lequel, lorsque le dispositif électronique (31 à 39) est dans un mode de fonctionnement spécifique, l'organe de commande (17) acquiert une image par l'intermédiaire d'une caméra de l'au moins un dispositif externe (31 à 39).
